# EUROPÄISCHE PATENTSCHRIFT

(11) **EP 1 266 719 B1**
(45) Veröffentlichungstag und Bekanntmachung des Hinweises auf die Patenterteilung: **11.08.2004**
(21) Anmeldenummer: 02012215.6
(22) Anmeldetag: 04.06.2002
(51) Int. Cl.: B23P 25/00, B23C 3/00, B23K 26/08

(54) **Fräsmaschine und Fräsverfahren**
Milling machine and milling method
Fraiseuse et procédé de fraisage

(30) Priorität: 13.06.2001 DE 10128536
(43) Veröffentlichungstag der Anmeldung: 18.12.2002
(73) Patentinhaber: DaimlerChrysler AG, 70567 Stuttgart (DE)
(72) Erfinder: Böhm, Jens, 89134 Blaustein (DE); Zimmermann, Michael, Dr., 89077 Ulm (DE); Herold, Ralf, 89079 Ulm (DE)

(56) Entgegenhaltungen:
- FR-A- 2 662 383
- US-A- 4 733 049
- KLOCKE F ET AL: "SCHWEISSEN UND LASERUNTERSTUETZTES FRAESEN MIT DEM DIODENLASER WELDING AND LASER ASSISTED MILLING USING A DIODE LASER" WERKSTATTSTECHNIK, SPRINGER VERLAG. BERLIN, DE, Bd. 90, Nr. 1/2, Januar 2000 (2000-01), Seiten 49-51, XP000912482 ISSN: 0340-4544
- "LASER TECHNOLOGY OPENS UP OPPORTUNITIES FOR CERAMICS" AUTOMOTIVE ENGINEER, MECHANICAL ENGINEERING PUBL.LTD. BURY ST.EDMUNDS, GB, Bd. 24, Nr. 2, 1. Februar 1999 (1999-02-01), Seite 22 XP000800544 ISSN: 0307-6490
- BOYD K B: "FIVE-AXIS MACHINING" MACHINE DESIGN, PENTON,INC. CLEVELAND, US, Bd. 46, Nr. 12, 16. Mai 1974 (1974-05-16), Seiten 134-138, XP002031560 ISSN: 0024-9114

## Beschreibung

Die Erfindung betrifft eine 3D-Fräsmaschine mit Laserunterstützung nach dem Oberbegriff des Anspruchs 1 und ein 3D-Fräsverfahren, mit Laserunterstützung nach dem Oberbegriff des Anspruchs 7.

Eine 3D-Fräsmaschine enthält eine Fräseinheit mit einer motorisch angetriebenen Arbeitsspindel zur Aufnahme eines Fräswerkzeuges, einen Arbeitstisch zum Aufspannen von Werkstücken, und Führungen und Antriebsorgane zur Erzeugung von Relativbewegungen der Fräseinheit und des Arbeitstisches in drei Raumrichtungen. Aus der US-4,733,049 ist eine solche Fräsmachine bekannt , die aüßerdem eine Lasereinrichtung zum Aussenden eines Lasertrahles enthält, die eine Fräsbearbeitung mit Laserunterstützung ermöglicht. Aus der DE 199 10 880 A1 ist eine Fräsmaschine bekannt, die außerdem eine Lasereinrichtung zum Aussenden eines Laserstrahles enthält, die alternativ zur Fräsbearbeitung eine Werkstückbearbeitung mittels Laserstrahl ermöglicht.

Sonderwerkstoffe wie zum Beispiel Keramiken oder bestimmte Stähle fräst man vorteilhaft mit Laserunterstützung. Dabei erwärmt ein Laserstrahl das Werkstück partiell, um die Schneidzone auf eine Temperatur zu bringen, bei der sich das Material leichter zerspanen lässt, insbesondere mit höheren Schnittgeschwindigkeiten. Verschiedene Verfahren zum laserunterstützten Fräsen sind in der US 5,906,459 beschrieben.

Freiformflächen fräst man normalerweise mit einem Kugelkopffräser, wie er z.B. in der DE 39 22 463 A1 beschrieben ist. Bei harten Sonderwerkstoffen ist aber kein Fräsen von Freiformflächen möglich, nur Diamantschleifen, bei dem die Zerspanvolumina sehr gering sind.

Die in den Patentansprüchen 1 und 7 angegebene Erfindung ermöglicht eine Fräsbearbeitung von Freiformflächen mit Laserunterstützung.

Bei der Bearbeitung von Freiformflächen mittels Kugelkopffräser treten ständig Richtungsänderungen auf. Da die Lasereinrichtung bei der erfindungsgemäßen Fräsmaschine so gelagert ist, dass sie eine Präzisionsbewegung um einen Punkt auf der Strahlachse durchführen kann, an dem sich der Kugelkopf befindet, kann man durch einfaches mechanisches Bewegen der Lasereinrichtung erreichen, dass der Laserbrennfleck auf der Werkstückoberfläche dem Kugelkopffräser stets in einem gewissen Abstand vorauseilt, um möglichst den gesamten Spanungsquerschnitt zu erwärmen. Während einer Richtungsänderung folgt der Laserbrennfleck einem Teil einer Kreis- oder Ellipsenbahn um den Kugelkopf herum. Dabei ermöglicht es der drehbare bzw. schwenkbare Arbeitstisch, den Anstellwinkel des Kugelkopffräsers zur Werkstückoberfläche an der aktuellen Bearbeitungsstelle in mindestens einer Ebene konstant zu halten, damit an den Fräserschneiden stets optimale Eingriffsbedingungen herrschen und somit eine möglichst große Vorschubgeschwindigkeit gewählt werden kann.

Vorzugsweise ist die Lasereinrichtung an einer Stelle auf der Strahlachse kardanisch gelagert, z.B. in einem drehbaren U-Bügel, und an einer davon beabstandeten Stelle auf der Strahlachse exzentrisch gelagert, insbesondere in einer Exzentrizitätsbaugruppe, die eine Einstellung der Amplitude der Präzisionsbewegung ermöglicht.

Die Lasereinrichtung ist vorzugsweise an einem Fräskopf befestigt, in dem die Arbeitsspindel gelagert ist. Eine verstellbare Befestigung ermöglicht eine schnelle Anpassung an verschiedene Fräserlängen und Fräserdurchmesser.

Eine geeignete Laserlichtquelle könnte im Prinzip zwar in der Lasereinrichtung integriert sein, in einer bevorzugten Ausführungsform ist aber eine getrennte Laserlichtquelle vorgesehen, die über einen flexiblen Lichtwellenleiter mit einer Laseroptik verbunden ist, welche die bewegliche Lasereinrichtung der Fräsmaschine bildet.

Da der Laserstrahl nicht auf den Kugelkopffräser treffen darf, ist die Bewegung des Laserbrennfleckes um den Kugelkopf herum im wesentlichen auf einen Halbkreis bzw. eine Halbellipse beschränkt (aufgrund des Winkels zwischen der Laserstrahlachse und der Achse der Arbeitsspindel folgt der Laserbrennfleck auf dem Bauteil in der Regel keiner Kreisbahn, sondern einer Ellipsenbahn). Daher kommt als Frässtrategie in erster Linie Tastfräsen in Frage, bei dem sich die Fräsrichtung um nicht mehr als 180° ändert. Mit gewissen Einschränkungen sind aber auch andere Frässtrategien möglich.

Weitere Merkmale und Vorteile der Erfindung ergeben sich aus der folgenden Beschreibung eines Ausführungsbeispiels anhand der Zeichnung. Darin zeigen:
Fig. 1 eine Ansicht eines Fräskopfes mit einer daran montierten Laserbaugruppe und einen dreh- und schwenkbaren Arbeitstisch mit Werkstück,
Fig. 2 einen Ausschnitt von Fig. 1 im Bearbeitungsbereich zur Verdeutlichung der Bewegungsmöglichkeiten,
Fig. 3a und 3b jeweils eine Ansicht der Laserbaugruppe in Längs- und Querrichtung.

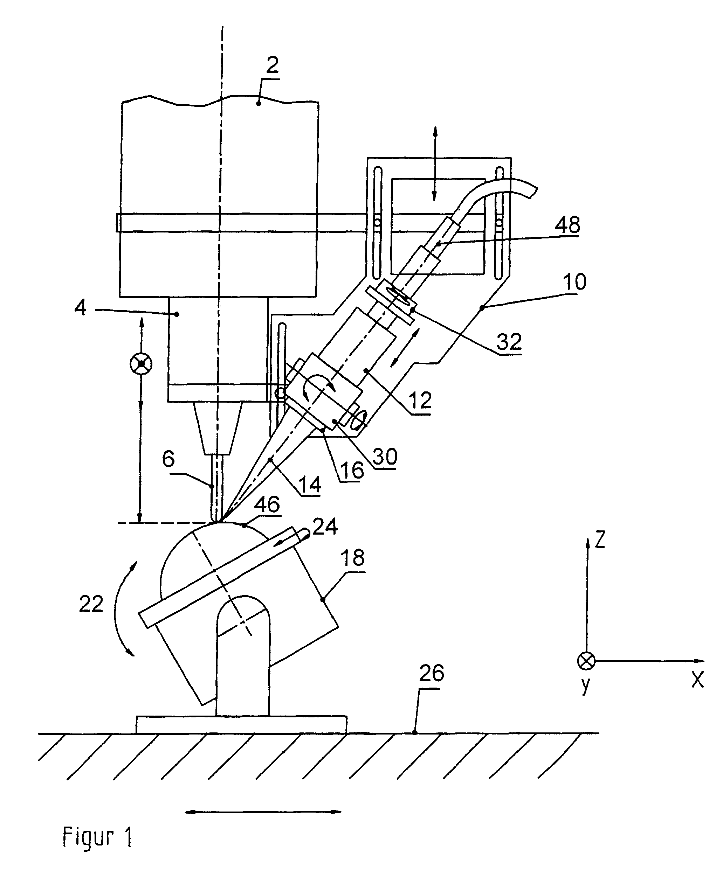

Fig. 1 zeigt einen Fräskopf 2 einer 3D-Fräsmaschine von vorne gesehen, speziell einer Portalfräsmaschine, wie sie aus der DE 34 04 869 A1 bekannt ist und von deren detaillierten Beschreibung hier abgesehen wird. So eine Fräsmaschine enthält allgemein eine Fräseinheit mit einer motorisch angetriebenen Arbeitsspindel 4 zur Aufnahme eines Fräswerkzeuges, einen Arbeitstisch 18 zum Aufspannen von Werkstücken, und Führungen und Antriebsorgane zur Erzeugung von Relativbewegungen der Fräseinheit und des Arbeitstisches in drei Raumrichtungen.

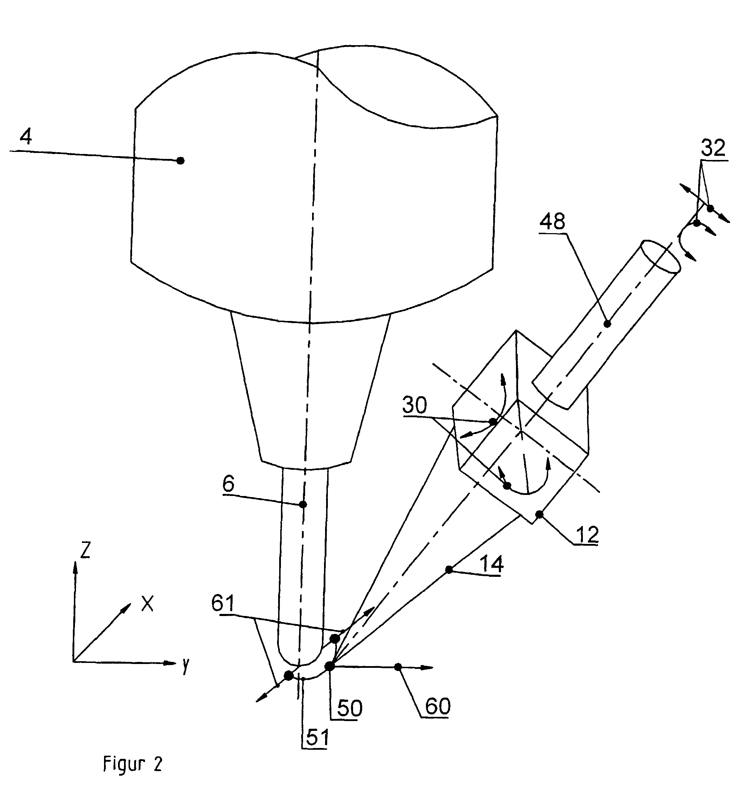

Im Fräskopf 2, der die Fräseinheit bildet, ist zentrisch eine Arbeitsspindel 4 gelagert, deren Achse in Fig. 1 und 2 senkrecht verläuft. Die Arbeitsspindel 4 wird durch einen in den Figuren nicht sichtbaren Motor zur Drehung um ihre Achse angetrieben und enthält eine axiale Bohrung zur Aufnahme verschiedener Werkzeuge, z.B. eines Kugelkopffräsers 6 (Figuren 1 und 2).

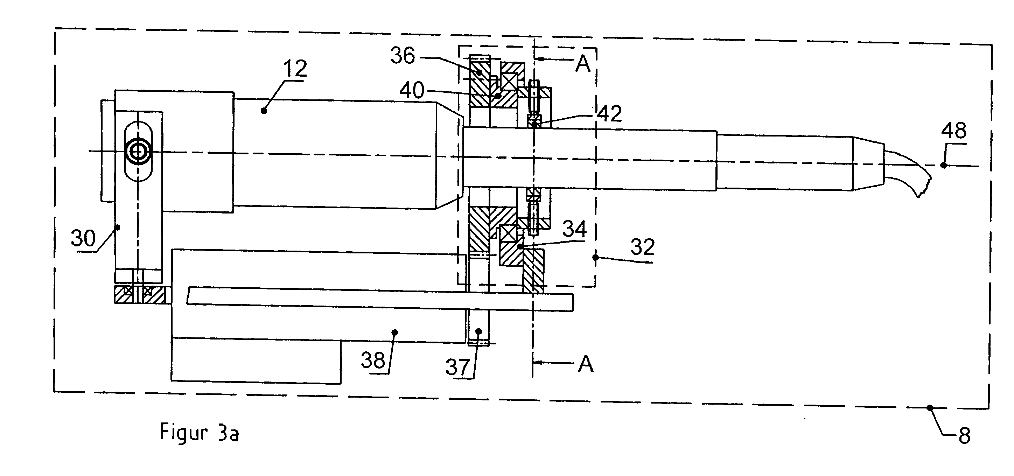

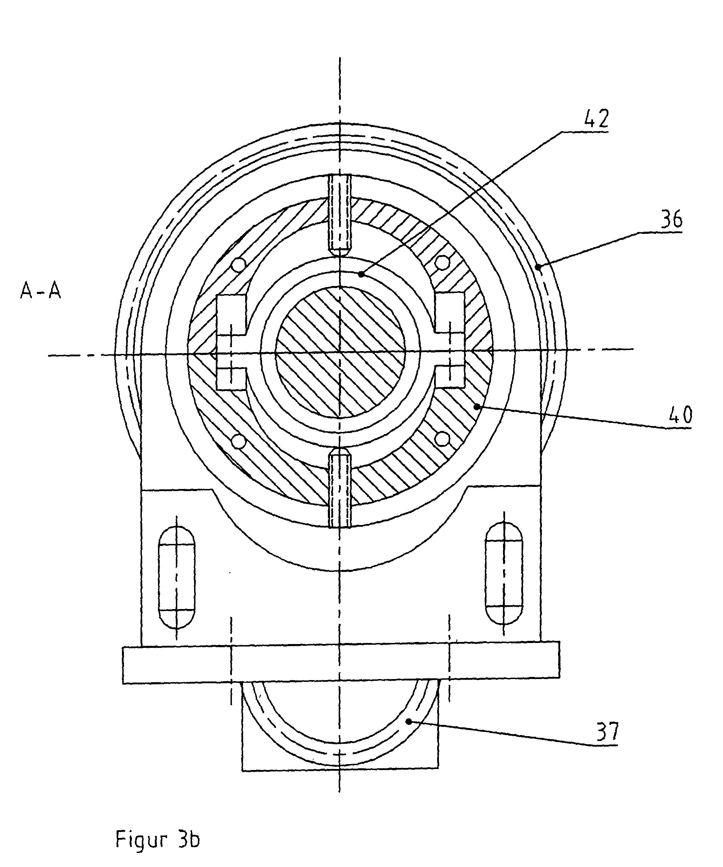

Seitlich am Fräskopf 2 befindet sich eine Laserbaugruppe 8 (Figuren 3a und 3b). Die Laserbaugruppe 8 ist in einem Gestell 10 eingebaut, das eine Lasereinrichtung in Form einer Laseroptik 12 enthält, die über einen nicht gezeigten flexiblen Lichtwellenleiter Laserlicht von einer äußeren Laserlichtquelle empfängt und einen gebündelten Laserstrahl 14 erzeugt, der durch ein Schutzglas 16 in ein Gebiet unterhalb der Arbeitsspindel 4 fällt, in dem sich im Betrieb der Kopf des Kugelkopffräsers 6 befindet.

An ihrem vorderen, dem Schutzglas 16 zugewandten Ende ist die Laseroptik 12 in einem kardanischen Lager 30 aufgehängt. An ihrem hinteren Ende, an dem sie das Laserlicht empfängt, ist die Laseroptik 12 in einer Exzentrizitätsbaugruppe 32 gelagert, die eine Präzisionsbewegung der Laseroptik 12 um das vordere, kardanische Lager 30 ermöglicht. Dabei kreist der Laserstrahl 14 um eine Mittelachse der Präzisionsbewegung, welche die Achse der Arbeitsspindel 4 am Ort des Kopfes des Kugelkopffräsers 6 unter einem spitzen Winkel von ca. 40° schneidet. Dies dient zum Ausgleich von Richtungsänderungen bzw. Wandern des Kontaktpunktes am Umfang des Kugelkopffräsers 6 bei konstantem Anstellwinkel zur Bauteiloberfläche in beiden bzw. mindestens einer Ebene.

Die Laserbaugruppe 8 ist in der Vertikalen verstellbar am Fräskopf 2 befestigt, um den mit einem doppelendigen Pfeil eingezeichneten Abstand zwischen der Arbeitsspindel 4 und dem Brennpunkt des Laserstrahles 14 an die Ausraglänge des Kugelkopffräsers 6 anpassen zu können.

Der Arbeitstisch 18 dient zum Aufspannen eines Werkstückes 46, um es unterstützt durch den Laserstrahl 14 mittels des Kugelkopffräsers 6 zu bearbeiten.

Während bei gängigen 3-Achs-Portalfräsmaschinen der Arbeitstisch 18 immer im gleichen Winkel zur Fräsmaschine ausgerichtet ist, verfügt die hier beschriebene Fräsmaschine zusätzlich über Lager und Antriebsorgane zum Drehen und/oder Schwenken des Arbeitstisches 18 um mindestens eine Achse. Wie in Fig. 1 erkennbar, ist der Arbeitstisch 18 mittels eines digitalen Servomotors um eine Achse 22 schwenkbar, die senkrecht zur Achse der Arbeitsspindel 4 verläuft. Zusätzlich ist der Arbeitstisch 18 um eine Achse 24 drehbar, die parallel zur Achse der Arbeitsspindel 4 verläuft, wobei die Drehung motorisch - z.B. auf einem Maschinentisch 26 - durchgeführt werden kann, der die vorher beschriebene Schwenk-Baugruppe trägt.

Die Laserbaugruppe 8 wird nun anhand von Fig. 3a und 3b näher beschrieben. Dier Laseroptik 12 hat ein zylindrisches (oder auch quaderförmiges) Gehäuse, das für die oben erwähnte kardanische Aufhängung in den Schenkeln eines U-Bügels 30 drehbar gelagert ist, der wiederum an seiner Basis drehbar gelagert ist. An ihrem anderen Ende ist die Laseroptik 12 in der Exzentrizitätsbaugruppe 32 gelagert, die eine Befestigungsplatte 34 enthält, an der ein Zahnrad 36 drehbar gelagert ist. Das Zahnrad 36 hat ein Mittelloch, durch das die Laseroptik 12 hindurchgeht. Das Zahnrad 36 ist mittels eines Antriebsmotors 38 und des Antriebszahnrades 37 um seine Achse drehbar. Auf der entgegengesetzten Seite der Befestigungsplatte 34 befindet sich innerhalb eines mit dem Zahnrad 36 verbundenen äußeren Ringes 40 ein Pendelgleitlager 42, dessen Exzentrizität in Bezug auf den äußeren Ring 40 bis zu einem Maximalwert von zum Beispiel 10 mm einstellbar ist. Das Pendelgleitlager 42 umschließt das Gehäuse der Laseroptik 12 passgenau und ist fest mit diesem verbunden.

Es bestehen Justagemöglichkeiten in Längsrichtung der Laserbaugruppe 8 zur Einstellung des Arbeitsabstandes zwischen dem Schutzglas 16 und der Werkstückoberfläche (z.B.: ± 30 mm) sowie zur Ausrichtung der Achse des Laserstrahles 14 zur Achse der Arbeitsspindel 4 (z.B.: Justagebereich -7 bis +10 mm am vorderen Ende der Laseroptik 12)

Die Laserbaugruppe 8 enthält ferner eine CCD-Kamera, mit der das Werkstück 46 im Bereich der Bearbeitungsstelle auf einem Monitor abgebildet wird.

Wenn der Antriebsmotor 38 angetrieben wird, kreist die Achse der Laseroptik 12 im Bereich der Exzentrizitätsbaugruppe 32 in einem Abstand von einigen Millimetern (entsprechend der eingestellten Exzentrizität) um eine Mittelachse 48 der Laserbaugruppe 8, die auf den Kopf des Kugelkopffräsers 6 ausgerichtet ist. Da die Laseroptik 12 an ihrem anderen Ende in einem kardanischen Lager 30 aufgehängt ist, vollführt sie dabei eine Präzisionsbewegung um die Mittelachse 48. Entsprechend beschreibt der Laserstrahl 14 am Ort des auf dem Arbeitstisch 18 befindlichen Werkstückes 46 eine Kreisbahn um die Mittelachse 48. Wenn die gerade bearbeitete Fläche auf dem Werkstück 46 eben ist und parallel zum Arbeitstisch 18 verläuft, beschreibt der Laserbrennfleck des Laserstrahles 14 eine Ellipsenbahn auf dem Werkstück 46, wenn der Antriebsmotor 38 angetrieben wird, wobei der Bewegungsspielraum auf ungefähr eine halbe Ellipse beschränkt wird, um zu verhindern, dass der Laserstrahl 14 auf den Schaft des Kugelkopffräsers 6 fallen kann.

Die Exzentrizität der Exzentrizitätsbaugruppe 32 wird so eingestellt, dass der mittlere Radius der Kreisbahn dem Radius des Kugelkopffräsers zuzüglich des Radius des Laserbrennfleckes entspricht, wodurch sich je nach Neigung des Bauteils ein gewisser Abstand des Brennfleckes zum Spanungsquerschnitt ergibt. Dieser Abstand sollte im allgemeinen zwar möglichst klein sein, er wird aber durch den Kopfdurchmesser des Kugelkopffräsers 6 beschränkt.

Beim Fräsen bewegt sich das Werkstück 46 laufend unter dem Kugelkopffräser 6 hinweg, und das Zahnrad 36 wird jeweils in eine Position gedreht, in welcher der Laserbrennfleck 50 auf eine Stelle auf dem Werkstück 46 fällt, die in einem drauf folgenden Augenblick durch den Kugelkopffräser 6 bearbeitet wird. Wenn sich die Bearbeitungsrichtung ändert, muss der Laserbrennfleck 50 zeitgleich entsprechend verschoben werden: Fig. 2 zeigt die Bewegungsbahn 51 des Laserbrennflecks 50 in Relation zu einer Vorschubbewegung des Kugelkopffräsers 6 in Y-Richtung 60 und X-Richtung 61, wobei der Laserbrennfleck 50 der Bearbeitungsstelle stets um einige Millimeter vorauseilt und dabei den gesamten Spanungsquerschnitt erwärmt.

Mit der beschriebenen Vorrichtung können Fräsrichtungsänderungen bis maximal 180° kompensiert werden. Daher wird als Frässtrategie Tastfräsen angewandt. Dabei entstehen auf den Freiformflächen des Werkstückes Fräsbahnen, die bei Betrachtung des Werkstückes senkrecht von oben als Geraden erscheinen.

Bei anderen Strategien zum Fräsen von 3D-Geometrien wie z.B. dem Höhenlinienfräsen oder dem äquidistanten Fräsen treten normalerweise Richtungsänderungen bis zu 360° auf, wobei sich die Fräsbahnen als geschlossene Konturen auf dem Bauteil abbilden. Da die Kompensation von Fräsrichtungsänderungen bei der beschriebenen Vorrichtung auf 180° beschränkt ist, können solche alternativen Frässtrategien nur mit Einschränkungen verfolgt werden.

Das Werkstück 46 wird im Verlauf der Bearbeitung geschwenkt bzw. gedreht (um die Achsen 22 bzw. 24, siehe Fig. 1), um den Anstellwinkel des Kugelkopffräsers 6 zur Werkstückoberfläche konstant zu halten. Zur Einhaltung eines nahezu konstanten Abstandes des Laserbrennfleckes 50 vom Spanungsquerschnitt in Vorschubrichtung kann es ausreichend sein, den Anstellwinkel nur in Vorschubrichtung konstant zu halten. Ein konstanter Anstellwinkel in zwei Ebenen kann weitere Vorteile für den Zerspanprozess bewirken. Bei einem dreh- und schwenkbaren Arbeitstisch 18 müssen dann neben den drei Achsen der 3D-Fräsmaschine zwei weitere Achsen des dreh- bzw. schwenkbaren Arbeitstisches 18 gesteuert werden, und es erfolgt eine 5-achsige Bearbeitung. Außerdem muss die kreis- bzw. ellipsenförmige Bewegung des Laserbrennfleckes 50 mittels des Antriebsmotors 38 um die Bearbeitungsstelle herum gesteuert werden. Dies setzt voraus, dass durch die Maschinensteuerung 6 Achsen interpoliert werden und das CAD/CAM-System die entsprechenden NC-Programme bei angepasster Frässtrategie generiert.

Ist der Arbeitstisch 18 nur in einer Ebene schwenkbar, d.h. bei einer 4-achsigen Bearbeitung, kann der Anstellwinkel nur in Vorschubrichtung konstant gehalten werden, wobei sich bei der Bearbeitung von Freiformflächen der Spanungsquerschnitt entlang der Schneidkante des Kugelkopffräsers 6 bewegt. Auch in diesem Fall ist mit der beschriebenen Vorrichtung ein Nachführen des Laserbrennfleckes 50 möglich, so dass der Spanungsquerschnitt durch den Laserstrahl 14 optimal erwärmt werden kann.

Bei der Variante der 5-achsigen Bearbeitung mittels Tastfräsen entsteht bei einem konstanten Anstellwinkel des Kugelkopffräsers 6 zur Werkstückoberfläche in Abhängigkeit von der Werkstückgeometrie eine Drehbewegung der Drehachse, die mit einer Änderung der Fräsrichtung (aus Sicht der Maschinenkoordinaten) verbunden ist. Die notwendige Bewegung des Laserbrennfleckes um den Radius des Kugelkopffräsers 6 zur Positionierung des Laserbrennfleckes in der Fräsrichtung und die damit in direktem linearem Zusammenhang stehende Drehbewegung der Exzentrizitätsbaugruppe 32 entspricht eben diesem Drehwinkel der Drehachse des drehbaren und schwenkbaren Arbeitstisches 18. Es besteht also ein linearer Zusammenhang zwischen diesen Drehbewegungen, der mit einem Multiplikationsfaktor (≤ 1) verknüpft ist, welcher wiederum vom Neigungswinkel der Laseroptik 12 zur Achse der Arbeitsspindel 4 bzw. zur Normalen der Werkstückoberfläche abhängt. Mit Hilfe dieses Zusammenhanges kann die Maschinensteuerung direkt berechnen, auf welche Weise der Antriebsmotor 38 angesteuert werden muss, um den Laserbrennfleck 50 stets an der richtigen Stelle zu positionieren.

Eine weitere Verbesserung der Bearbeitungsmöglichkeiten ergibt sich, wenn die Fräseinheit um die Achse der Arbeitsspindel (4) drehbar angeordnet ist.

## Patentansprüche

1. Fräsmaschine mit Laserunterstützung, mit
- einer Fräseinheit mit einer motorisch angetriebenen Arbeitsspindel (4) zur Aufnahme eines Fräswerkzeuges (6),
- einem Arbeitstisch (18) zum Aufspannen von Werkstücken,
- Führungen und Antriebsorgane zur Erzeugung von Relativbewegungen der Fräseinheit und des Arbeitstisches (18) in drei Raumrichtungen, und
- einer Lasereinrichtung (12) zum Aussenden eines Laserstrahles (14),
**dadurch gekennzeichnet, dass** das Fräswerkzeug ein Kugelkopffräser ist und dass die Fräsmaschine
- Lager (30, 32) und Antriebsorgane (36, 38) zur Erzeugung einer Präzisions-bewegung der Lasereinrichtung (12) um einen Punkt auf der Strahlachse umfasst, wobei der Laserstrahl (14) um eine Mittelachse (48) kreist, welche die Achse der Arbeitsspindel (4) unter einem spitzen Winkel schneidet, und
- Lager und Antriebsorgane zum Drehen und/oder Schwenken des Arbeitstisches (18) um mindestens eine Achse (22, 24) aufweist.

2. Fräsmaschine nach Anspruch 1, **dadurch gekennzeichnet, dass** die Lasereinrichtung (12) an einer Stelle auf der Strahlachse kardanisch (30) gelagert ist und an einer davon beabstandeten Stelle auf der Strahlachse exzentrisch (32) gelagert ist.

3. Fräsmaschine nach Anspruch 1 oder 2, **dadurch gekennzeichnet, dass** die Lager (32) für eine Präzisionsbewegung der Lasereinrichtung (12) dafür eingerichtet sind, die Amplitude der Präzisionsbewegung innerhalb eines vorbestimmten Bereiches einzustellen.

4. Fräsmaschine nach einem der vorhergehenden Ansprüche, **dadurch gekennzeichnet, dass** die Fräseinheit um die Achse der Arbeitsspindel (4) drehbar ist.

5. Fräsmaschine nach einem der vorhergehenden Ansprüche, **dadurch gekennzeichnet, dass** die Lasereinrichtung (12) an einem Fräskopf (2) befestigt ist, in dem die Arbeitsspindel (4) gelagert ist.

6. Fräsmaschine nach einem der vorhergehenden Ansprüche, **dadurch gekennzeichnet, dass** die Lasereinrichtung (12) eine Laseroptik ist, die über einen flexiblen Lichtwellenleiter mit einer getrennten Laserlichtquelle verbunden ist.

7. Verfahren zum Fräsen eines Werkstückes mit Laserunterstützung bei dem man das Werkstück und ein rotierendes Fräswerkzeug in drei Raumrichtungen relativ zueinander bewegt,
**dadurch gekennzeichnet, dass** man als Fräswerkzeug einen Kugelkopffräser (6) verwendet, dass während des Fräsens eine Lasereinrichtung (12) einen Laserstrahl (14) auf eine Stelle der Werkstückoberfläche richtet, die der Fräsbearbeitungsstelle in der aktuellen Vorschubrichtung vorauseilt, dass man die Lasereinrichtung eine Präzisionsbewegung um einen Punkt auf der Strahlachse durchführen lässt, um Änderungen der Fräsrichtung während der Bearbeitung zu kompensieren, und dass man das Werkstück (46) während der Bearbeitung zusätzlich dreht und/oder schwenkt, um den Anstellwinkel des Kugelkopffräsers zur Werkstückoberfläche in mindestens einer Ebene konstant zu halten.

8. Verfahren nach Anspruch 7, **dadurch gekennzeichnet, dass** als Frässtrategie Tastfräsen verwendet wird.

## Claims

1. Milling machine with laser assistance, having
- a milling unit with a motor-driven work spindle (4) for accommodating a milling tool (6),
- a work table (18) for clamping workpieces,
- guides and drive elements for producing relative movements of the milling unit and of the work table (18) in three spatial directions, and
- a laser device (12) for emitting a laser beam (14),
**characterized in that** the milling tool is a ball head cutter and **in that** the milling machine
- comprises bearings (30, 32) and drive elements (36, 38) for producing a precision movement of the laser device (12) about a point on the beam axis, the laser beam (14) orbiting about a centre axis (48) which intersects the axis of the work spindle (4) at an acute angle, and
- has bearings and drive elements for rotating and/or swivelling the work table (18) about at least one axis (22, 24).

2. Milling machine according to Claim 1, **characterized in that** the laser device (12) is cardanically mounted (30) at a location on the beam axis and is eccentrically mounted (32) at a location at a distance therefrom on the beam axis.

3. Milling machine according to Claim 1 or 2,
**characterized in that** the bearings (32) for a precision movement of the laser device (12) are set up for setting the amplitude of the precision movement within a predetermined range.

4. Milling machine according to one of the preceding claims, **characterized in that** the milling unit is rotatable about the axis of the work spindle (4).

5. Milling machine according to one of the preceding claims, **characterized in that** the laser device (12) is fastened to a milling head (2), in which the work spindle (4) is mounted.

6. Milling machine according to one of the preceding claims, **characterized in that** the laser device (12) is a laser optical system which is connected to a separate laser light source via a flexible optical fibre.

7. Method of milling a workpiece with laser assistance, in which the workpiece and a rotating milling tool are moved relative to one another in three spatial directions, **characterized in that** the milling tool used is a ball head cutter (6), **in that**, during the milling, a laser device (12) directs a laser beam (14) onto a location of the workpiece surface which runs in advance of the milling location in the current feed direction, **in that** the laser device is made to perform a precision movement about a point on the beam axis in order to compensate for changes in the milling direction during the machining, and **in that** the workpiece (46) is additionally rotated and/or swivelled during the machining in order to keep the setting angle of the ball head cutter relative to the workpiece surface constant in at least one plane.

8. Method according to Claim 7, **characterized in that** scan milling is used as the milling strategy.

## Revendications

1. Fraiseuse avec assistance par laser comprenant :
- une unité de fraisage avec une broche de travail (4) à entraînement motorisé destinée à recevoir un outil de fraisage (6),
- une table de travail (18) pour serrer des pièces,
- des guides et des organes d'entraînement pour générer des mouvements relatifs de l'unité de fraisage et de la table de travail (18) dans trois directions dans l'espace, et
- un dispositif à laser (12) pour émettre un rayon laser (14),
**caractérisée en ce que** l'outil de fraisage est une fraise à tête sphérique et que la fraiseuse
- comprend des roulements (30, 32) et des organes d'entraînement (36, 38) pour produire un mouvement de précision du dispositif à laser (12) autour d'un point sur l'axe du rayon, le rayon laser (14) tournant autour d'un axe central (48) qui coupe l'axe de la broche de travail (4) sous un angle aigu, et
- présente des roulements et des organes d'entraînement pour faire tourner et/ou basculer la table de travail (18) autour d'au moins un axe (22, 24).

2. Fraiseuse selon la revendication 1, **caractérisée en ce que** le dispositif à laser (12) repose à la manière d'un cardan (30) sur en endroit de l'axe du rayon et repose de manière excentrique (32) sur un endroit espacé de celui-ci sur l'axe du rayon.

3. Fraiseuse selon la revendication 1 ou 2, **caractérisée en ce que** les roulements (32) pour un mouvement de précision du dispositif à laser (12) sont arrangés de manière à régler l'amplitude du mouvement de précision au sein d'une zone prédéfinie.

4. Fraiseuse selon l'une des revendications précédentes, **caractérisée en ce que** l'unité de fraisage peut tourner autour de l'axe de la broche de travail (4).

5. Fraiseuse selon l'une des revendications précédentes, **caractérisée en ce que** le dispositif à laser (12) est fixé à une tête de fraisage (2) dans laquelle est logée la broche de travail (4).

6. Fraiseuse selon l'une des revendications précédentes, **caractérisée en ce que** le dispositif à laser (12) est une optique à laser qui est reliée à une source de lumière laser séparée par le biais d'une fibre optique souple.

7. Procédé de fraisage d'une pièce avec assistance par laser avec lequel la pièce et un outil de fraisage en rotation sont déplacés l'un par rapport à l'autre dans trois directions dans l'espace, **caractérisé en ce que** l'outil de fraisage utilisé est une fraise à tête sphérique (6), qu'un dispositif à laser (12) dirige un rayon laser (14) sur un point de la surface de la pièce pendant le fraisage, lequel est en avance de phase par rapport au point d'usinage de la fraise dans le sens d'avance actuel, que le dispositif à laser effectue un mouvement de précision autour d'un point sur l'axe du rayon pour compenser des modifications du sens de fraisage pendant l'usinage et que la pièce (46) est tournée et/ou basculée en plus pendant l'usinage afin de maintenir l'angle d'incidence de la fraise à tête sphérique par rapport à la surface de l'outil constant dans au moins un plan.

8. Procédé selon la revendication 7, **caractérisé en ce que** la stratégie de fraisage utilisée est le fraisage par palpage.
